# EUROPÄISCHE PATENTSCHRIFT

(11) **EP 2 942 752 B1**
(45) Veröffentlichungstag und Bekanntmachung des Hinweises auf die Patenterteilung: **16.11.2016**
(21) Anmeldenummer: 15161067.2
(22) Anmeldetag: 26.03.2015
(51) Int. Cl.: G06T 7/00

(54) **Verfahren zur Bestimmung des Abstands eines abgebildeten Gegenstands**
Method for determining the distance of an imaged object
Procédé de détermination de distance d'un objet représenté

(30) Priorität: 08.05.2014 AT 503222014
(43) Veröffentlichungstag der Anmeldung: 11.11.2015
(73) Patentinhaber: AIT Austrian Institute of Technology GmbH, 1220 Wien (AT)
(72) Erfinder: Huber-Mörk, Reinhold, 1220 Wien (AT); Stolc, Svorad, 831 01 Bratislava (SK)
(74) Vertreter: Wildhack & Jellinek

(56) Entgegenhaltungen:
- HUBER-MÖRK R ET AL: "Shape from Refocus", 8. Dezember 2014 (2014-12-08), ADVANCES IN COMMUNICATION NETWORKING : 20TH EUNICE/IFIP EG 6.2, 6.6 INTERNATIONAL WORKSHOP, RENNES, FRANCE, SEPTEMBER 1-5, 2014, REVISED SELECTED PAPERS; [LECTURE NOTES IN COMPUTER SCIENCE , ISSN 1611-3349], SPRINGER VERLAG, DE, PAGE(S) 153 - 162, XP047297188, ISSN: 0302-9743 ISBN: 978-3-540-89964-8 * Zusammenfassung * * Abschnitte 3, 4 *
- KARTIK VENKATARAMAN ET AL: "PiCam", ACM TRANSACTIONS ON GRAPHICS (TOG), ACM, US, Bd. 32, Nr. 6, 1. November 2013 (2013-11-01), Seiten 1-13, XP058033885, ISSN: 0730-0301, DOI: 10.1145/2508363.2508390
- TAO MICHAEL W ET AL: "Depth from Combining Defocus and Correspondence Using Light-Field Cameras", 2013 IEEE INTERNATIONAL CONFERENCE ON COMPUTER VISION, IEEE, 1. Dezember 2013 (2013-12-01), Seiten 673-680, XP032572984, ISSN: 1550-5499, DOI: 10.1109/ICCV.2013.89 [gefunden am 2014-02-28]
- J? EDRZEJ KOWALCZUK ET AL: "Light Field Assisted Stereo Matching using Depth from Focus and Image-Guided Cost-Volume Filtering", PROCEEDINGS OF THE 2012 INTERNATIONAL CONFERENCE ON IMAGE PROCESSING, COMPUTER VISION, AND PATTERN RECOGNITION, IPCV 2012, 16. Juli 2012 (2012-07-16), Seiten 1114-1119, XP055214219,

## Beschreibung

Die Erfindung betrifft ein Verfahren zur Bestimmung des Abstands eines abgebildeten Gegenstands von einer Lichtfeld-Aufnahmeeinrichtung.

Aus dem Stand der Technik sind unterschiedliche Methoden zur Bestimmung des Abstands eines abgebildeten Gegenstands bzw. einzelner Teilbereiche der Oberfläche eines abgebildeten Gegenstands von einer Aufnahmeeinrichtung bekannt. Insbesondere ist es bekannt, mittels dreidimensionaler Stereomatchingverfahren die einzelnen von zueinander ausgerichteten Kameras erstellten Bilder zu korrelieren und somit eine Tiefeninformation der einzelnen abgebildeten Gegenstände zu gewinnen.

Auch ist es bekannt, Tiefeninformation aus Lichtfeldern zu berechnen, siehe K. Venkataraman et al., "PiCam: An Ultra-Thin High Performance Monolithic Camera Array", ACM Transactions on Graphics, Vol. 32, No. 6, 2013, W. Tao et al, "Depth from Combining Defocus and Correspondence Using Light-Field Cameras", Procceedings of IEEE International Conference on Computer Vision 2013, pages 673 - 680, 2013 oder J. Kowalczuk, "Light Field Assisted Stereo Matching using Depth from Focus and Image-Guided Cost-Volume Filtering", Proceedings of the 2012 International Conference on Image Processing, pages 1114-1119, 2012.

Solche Verfahren benötigen zum Teil recht aufwendige Matchingverfahren mit relativ großem Ressourcenbedarf.

Aufgabe der Erfindung ist es, die mittels einer Lichtfeld-Aufnahmeeinrichtung erstellten Lichtfelder dazu heranzuziehen, den Abstand einzelner Bereiche der Oberfläche eines abgebildeten Gegenstands zur Lichtfeld-Aufnahmeeinrichtung zu ermitteln.

Die Erfindung löst diese Aufgabe bei einem Verfahren der eingangs genannten Art mit den kennzeichnenden Merkmalen des Patentanspruchs 1.

Hierbei besteht der erhebliche Vorteil, dass gerade bei einer Vielzahl von erstellten Zwischenbildern eine geringe Ressourcenbelastung erreicht wird. Es ergibt sich ein wesentlicher Vorteil, wenn viele Überlagerungszwischenbilder erstellt werden, da diese nicht erst bewertet werden brauchen, sondern durch einfache Summation aus den verschobenen Zwischenbildern in Kombination mit einer, insbesondere nichtlinearen, Operation des zweiten Teilschritts des Qualitätsmaßes bewertet werden können.

Eine vorteilhafte Verbesserung des erfindungsgemäßen Verfahrens bzw. genauere Ermittlung des ermittelten Abstands sieht vor,
- dass für die jeweiligen Pixelposition das Qualitätsbild mit dem größten Qualitätswert ermittelt wird und die diesem Qualitätsbild zugeordnete Gegenstandsweite als Abstand herangezogen wird, oder
- dass für die jeweilige Pixelposition jeweils das Qualitätsbild mit dem größten Qualitätswert ermittelt wird und unter den an derselben Pixelposition liegenden Qualitätswerten von Bildern mit ähnlicher Gegenstandsweite eine Interpolation vorgenommen wird und eine Interpolationsfunktion gebildet wird, die den Verlauf der Qualität über die Gegenstandsweite angibt, und das Maximum der Qualität für diese Interpolationsfunktion gesucht wird und die dem Maximum der Qualität durch die Interpolationsfunktion zugewiesene Gegenstandsweite als Abstand herangezogen wird, wobei insbesondere ein Abstandsbild mit den Abmessungen eines der Qualitätsbilder erstellt wird und an jeder Pixelposition der Abstand bestimmt und dem Abstandsbild an der jeweiligen Pixelposition zugewiesen wird.

Falls die Anzahl der Überlagerungszwischenbilder groß gegenüber der Anzahl der Teilbilder ist, kann auch auf einer Standardarchitektur eine vorteilhafte Ressourcenersparnis erzielt werden.

Zur besonders genauen Detektion des Abstands kann vorgesehen sein, dass bei Verschiebung der einzelnen Teilbilder in Abhängigkeit von der Gegenstandsweite um nicht ganzzahlige Pixelpositionen eine Interpolation der Werte der Zwischenergebnisse durchgeführt wird, insbesondere
- indem eine Interpolation nach dem kubischen oder linearen Verfahren durchgeführt und/oder
- indem der Wert des jeweils am nächsten liegenden Nachbarpixels selektiert wird.

Eine besonders vorteilhafte Bestimmung des Abstandes sieht vor, dass als Qualitätsmaß ein Schärfemaß in Form des Absolutbetrags einer, insbesondere ersten oder zweiten, räumlichen Ableitung des Intensitätswerts herangezogen wird, und/oder
dass als Qualitätsmaß ein Schärfemaß in Form der, in einer lokalen Umgebung um das jeweilige Pixel ermittelten Fourier-Komponenten insbesondere bestimmt durch eine gewichtete Summe der Absolutwerte oder Quadrate der Koeffizienten der betrachteten Fourier-Komponenten, insbesondere höheren Ortsfrequenzen entsprechende Fourier-Komponenten, und/oder einzelner gerader und ungerader Fourier-Basisfunktionen, herangezogen wird.

Eine andere vorteilhafte Abstandsbestimmung sieht vor, dass als Qualitätsmaß ein Übereinstimmungsmaß herangezogen wird, zu dessen Bildung die Norm oder der Betrag der Differenz des Intensitätswerts und des Intensitätswerts eines Referenzzwischenbilds herangezogen wird, wobei eine große Übereinstimmung mit dem Referenzzwischenbild eine hohe Qualität indiziert,
wobei das Referenzzwischenbild unter den Zwischenbildern ausgewählt wird, und vorzugsweise dasjenige Zwischenbild als Referenzzwischenbild ausgewählt wird, das demjenigen Teilbild zugeordnet ist, dessen Verschiebungsvektor gleich dem Nullvektor ist.

Zur weiteren Verbesserung des Abstandes kann vorgesehen sein, dass als Qualitätsmaß eine Kombination eines vorstehend dargestellten Übereinstimmungsmaßes und eines vorstehend dargestellten Schärfemaßes herangezogen wird, wobei eine große Übereinstimmung und eine große Schärfe jeweils eine hohe Qualität indizieren.
Die einfachste Kombination besteht in einer gewichteten Summe oder in der Bildung eines Mittelwerts. Es besteht jedoch auch die Möglichkeit, unterschiedliche nichtlineare Operationen auf das Übereinstimmungsmaß bzw. das Schärfemaß anzuwenden oder sogar eine auf das jeweilige Pixel bezogene lokale Funktion in die Bestimmung der Kombination mit einzubeziehen.

Mehrere besonders bevorzugte Ausführungsformen der Erfindung wird anhand der folgenden Zeichnungsfiguren näher erläutert.
**Fig. 1** zeigt eine Lichtfeld-Aufnahmeeinrichtung mit Kameras und einem aufgenommenen Gegenstand. **Fig. 2** zeigt die bei der in **Fig. 1** dargestellten Konfiguration erstellten Teilbilder bzw. das Lichtfeld. **Fig. 3** zeigt Abbilder eines Gegenstands in zwei Kameras bei unterschiedlichem Abstand zur Lichtfeld-Aufnahmeeinrichtung. **Fig. 4** zeigt die Verschiebung von Teilbildern zur Erreichung eines scharfen Abbilds. **Fig. 5** zeigt eine Verschiebung unter Annahme einer abweichenden Gegenstandsweite, was, wie in **Fig. 6** dargestellt, zu einem unscharfen Überlagerungsbild führt.
**Fig. 7** zeigt eine Vorgehensweise, bei der zunächst eine Vielzahl von Überlagerungszwischenbildern ermittelt wird und anschließend für jedes der Überlagerungszwischenbilder jeweils separat ein Schärfemaß ermittelt wird.
**Fig. 8** zeigt das bevorzugte erfindungsgemäße Vorgehen, bei dem zunächst lediglich die linearen Anteile des Qualitäts- oder Schärfemaßes bestimmt werden und anschließend die Überlagerung zur Erstellung einzelner Zwischenbilder vorgenommen wird, auf die anschließend der zweite, nichtlineare Teil des Schärfemaßes angewendet wird.
**Fig. 9** zeigt die Bestimmung des Abstands eines in einem Pixel abgebildeten Gegenstandsbereichs des aufgenommenen Gegenstands mittels Interpolation.
**Fig. 10** zeigt eine erste bevorzugte Ausführungsform zur Überlagerung der gegeneinander verschobenen Teilbilder des Bildstapels. **Fig. 11** zeigt eine weitere bevorzugte Durchführung der Überlagerung zur Ermittlung der Überlagerungszwischenbilder.

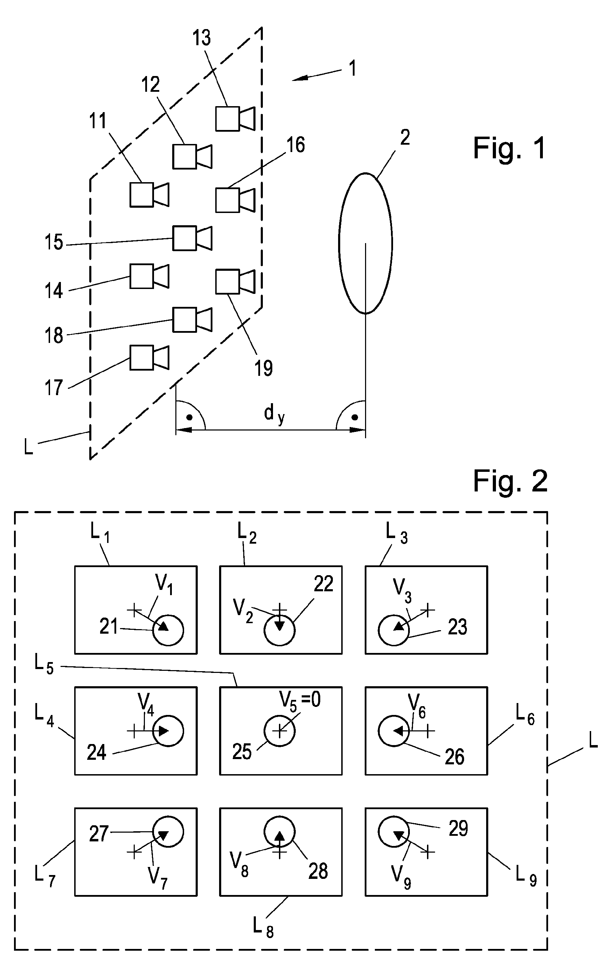

In **Fig. 1** ist eine mögliche Ausführungsform einer Lichtfeld-Aufnahmeeinheit 1 dargestellt, die eine Anzahl von mit einer vorgegebenen relativen Lage rasterförmig in einer Ebene 10 angeordneten Kameras 11, ..., 19 aufweist.

Anstelle der in **Fig. 1** dargestellten Ausführungsform ist es jedoch auch möglich, eine beliebige Anordnung von Kameras zu verwenden, die einen überlappenden Aufnahmebereich aufweisen, wobei die Bilder der Kameras anschließend einer numerisch-optischen Korrektur unterzogen werden können, sodass die virtuellen optischen Achsen der jeweiligen Bilder die vorstehend genannten Bedingungen erfüllen, d.h. dass die virtuellen optischen Achsen der korrigierten Bilder insbesondere parallel zueinander stehen. Eine solche numerisch-optische Korrektur ist im Bereich der Stereo-Vision allgemein bekannt und kann beispielsweise bei "Hartley, R., & Zisserman, A. (2003). Multiple view geometry in computer vision. Cambridge university press." nachgelesen werden.

Mit den Kameras 11, ..., 19 der Lichtfeld-Aufnahmeeinheit 1 wird ein Bildstapel L umfassend eine Anzahl von Teilbildern L₁, ..., L₉ ermittelt, wobei jedes Teilbild L₁, ..., L₉ von je einer der Kameras 11, ..., 19 erstellt wird. Der Gegenstand 2 ist eben und kreisförmig und weist einen Abstand dy zur Lichtfeld-Aufnahmeeinheit 1 auf. Die Teilbilder L₁, ..., L₉ des Bildstapels L unterscheiden sich bezüglich des Aufnahmepunkts und der daraus resultierenden unterschiedlichen Beobachtungsrichtung **(****Fig. 2****).** Dies bedeutet, dass jedes der Teilbilder L₁, ..., L₉ von einem unterschiedlichen Aufnahmepunkt her aufgenommen wird und entsprechend der Gegenstand 2 im jeweiligen Teilbild L₁, ..., L₉ aus einem unterschiedlichen Blickwinkel abgebildet ist. Je nach Blickwinkel ist das Abbild 21, ..., 29 des Gegenstands 2 im jeweiligen Teilbild L₁, ... L₉ um einen Verschiebungsvektor V₁, ..., V₉ gegenüber einem im Zentrum des Teilbilds L₁, ..., L₉ befindlichen Referenzpunkt, gekennzeichnet durch ein Kreuz, verschoben.

Zur vereinfachten Darstellung wird zunächst angenommen, dass es sich bei dem abzubildenden Gegenstand 2 **(****Fig. 1****)** um einen kreisförmigen, flachen und ebenen Gegenstand handelt, der von der Aufnahmeeinrichtung 1 bzw. den einzelnen Kameras 11, ..., 19 der Aufnahmeeinrichtung 1 einen vorgegebenen Abstand d aufweist. Aufgrund dieses Abstands erscheint das Abbild des Gegenstands 2 in den einzelnen Teilbildern L₁, ..., L₉ des Bildstapels L jeweils um einen Verschiebungsvektor V₁, ..., V₉ in der Bildebene verschoben. Der in Bezug auf die Verschiebung herangezogene angenommene Abstand des Gegenstands 2 zur Lichtfeld-Aufnahmeeinheit 1 wird in Analogie zur Fotografie auch als Gegenstandsweite bezeichnet.

Für die weiteren Erörterungen wird eine der Kameras 11, ..., 19 als Referenzkamera 15 bezeichnet. Betrachtet man das von der Referenzkamera 15 erstellte Teilbild L₅ als Referenzbild LR, so wird mit einer rechts oberhalb der Referenzkamera 15 angeordneten Kamera 13 ein Abbild 23 des Gegenstands 2 erstellt, das gegenüber dem Abbild 25 im Referenzbild 15 um einen Verschiebungsvektor V₃ nach links unten verschoben ist.

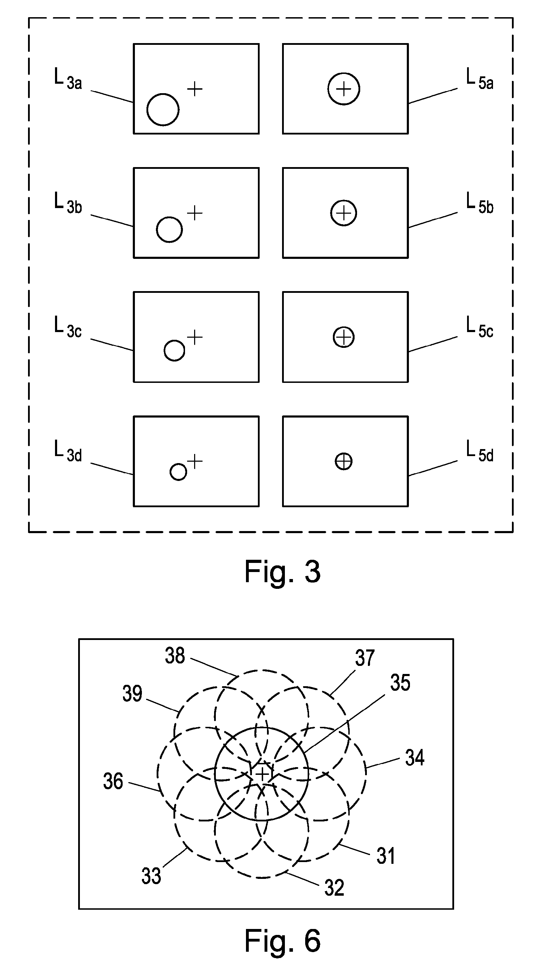

**Fig. 3** zeigt eine Anzahl von Teilbildern L₃ₐ, ..., L_{3d}, L₅ₐ, ..., L_{5d} desselben Gegenstands 2 jeweils in unterschiedlichen Abständen von den Kameras 13, 15, wobei der Gegenstand 2 jeweils einen unterschiedlichen Abstand zu den Kameras 13, 15 aufweist. Während sich in den von der Referenzkamera 15 erstellten Teilbildern L₅ₐ, ..., L_{5d} jeweils nur der Durchmesser des Abbilds 21, ..., 29 des Gegenstands 2 ändert, d.h. mit steigendem Abstand verkleinert, verringert sich bei den Teilbildern L₃ₐ, ..., L_{3d} der Kamera 13 auch der Abstand zum Mittelpunkt des jeweiligen Bilds, dargestellt durch ein Kreuz.

Je weiter der Gegenstand 2 von den einzelnen Kameras 11, ..., 19 oder der Lichtfeld-Aufnahmeeinheit 1 entfernt ist, umso geringer ist diese Verschiebung und umso geringer ist der Betrag des Verschiebungsvektors V₁, ... V₉. Im Aufnahmebereich der einzelnen Kameras 11, ..., 19 der Lichtfeld-Aufnahmeeinheit 1 befindet sich ein Gegenstand 2, der von allen Kameras 11, ..., 19 der Lichtfeld-Aufnahmeeinheit 1 erfasst wird. Ist der Gegenstand 2 sehr weit von der Lichtfeld-Aufnahmeeinrichtung 1 entfernt, sind die ermittelten Verschiebungsvektoren V₁,..., V₉ entsprechend kleiner.

Bei einer vorab durchzuführenden Kalibrierung wird eine Anzahl von voneinander unterschiedlichen möglichen Gegenstandsweiten d₁, ..., dₙ vorgegeben, wobei angenommen wird, dass sich der Gegenstand 2 typischerweise in einem Abstand zur Lichtfeld-Aufnahmeeinrichtung 1 befindet, der zwischen der minimal vorgegebenen Gegenstandsweite d1 und der maximal vorgegebenen Gegenstandsweite dₙ liegt.

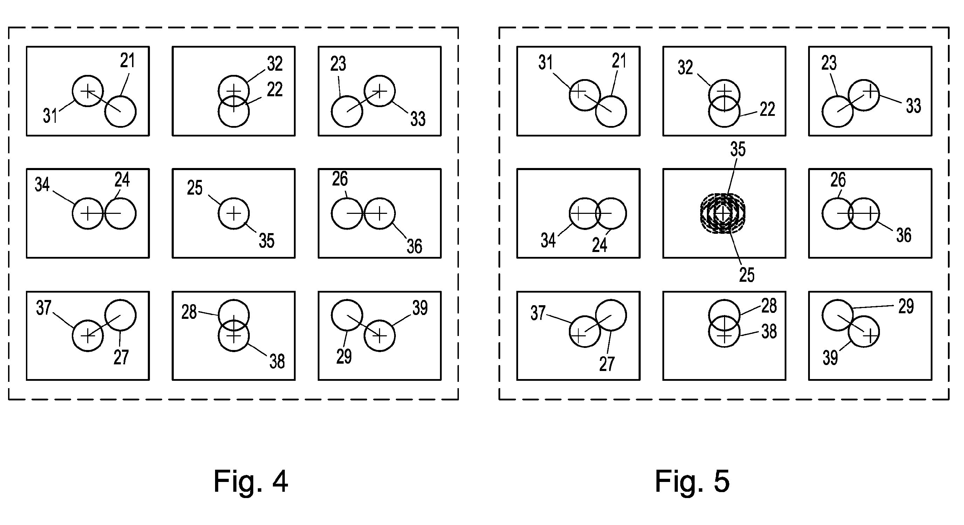

Bei dieser Kalibrierung kann für jede der Kameras 11, ..., 19 und für jede vorgegebene Gegenstandsweite d₁, ..., dₙ jeweils ein Verschiebungsvektor V ermittelt werden, mit dem die Abbilder 21, ..., 29 von in derselben Ebene liegenden und parallel zur Ebene 10 der Kameras 11, ..., 19 liegenden Gegenständen 2 zur Deckung gebracht werden können. Sofern die einzelnen Teilbilder L₁, ..., Lₘ des Bildstapels L vorab nicht kalibriert wurden, kann eine Verschiebung auch derart vorgenommen werden, dass jedem einzelnen Pixel jeweils ein separater Verschiebungsvektor V zugewiesen wird und jedes Pixel jeweils separat entsprechend seinem Verschiebungsvektor V verschoben wird. Ein Kalibrierungsschritt angewandt auf die aufgenommenen Teilbilder gewährleistet einen Verschiebungsvektor der für alle Pixel eines Teilbildes identisch ist. Eine solcher Kalibrierungsschritt ist im Bereich der Stereo-Vision allgemein bekannt und kann beispielsweise bei "Hartley, R., & Zisserman, A. (2003). Multiple view geometry in computer vision. Cambridge university press." nachgelesen werden.
Anhand der der jeweiligen Gegenstandsweite d₁, ..., dₙ zugeordneten Verschiebungsvektoren V können die Teilbilder L₁, ..., Lₘ verschoben werden und die Abbilder 21, ..., 29 werden entsprechend verschoben. Durch die Verschiebung werden verschobene Abbilder 31, ..., 39 des Gegenstands 2 erstellt. Werden die einzelnen verschobenen Abbilder 31, ..., 39 überlagert, beispielsweise pixelweise der Mittelwert der verschobenen Abbilder 31, ..., 39 gebildet, ergibt sich als Überlagerungsbild ein Bild, in dem der Gegenstand 2 scharf abgebildet ist **(****Fig. 4****).**

Der die Verschiebung charakterisierende Verschiebungsvektor V wird durch die jeweilige relative Lage der den Gegenstand 2 aufnehmenden Kameras 11, ..., 19 der Lichtfeld-Aufnahmeeinrichtung zur Referenzkamera 15 sowie durch die vorgegebene Gegenstandsweite d₁, ..., dₙ bestimmt. Befindet sich also der aufgenommene Gegenstand 2 exakt in einer Ebene, die einen Abstand von der Lichtfeld-Aufnahmeeinheit 1 aufweist, der einer vorgegebenen Gegenstandsweite d₁, ..., dₙ entspricht, so kann durch Überlagerung sämtlicher Teilbilder L₁, ..., L₉ des Bildstapels L, die entsprechend ihrem Aufnahmepunkt und der jeweiligen Gegenstandsweite d₁, ..., dₙ mit einem diesbezüglichen Verschiebungsvektor V verschoben wurden, ein scharfes Abbild des Gegenstands 2 erstellt werden **(****Fig. 4****).**

Werden die einzelnen Verschiebungsvektoren V₁, ..., V₉ mittels eines vom Abstand des Gegenstands von der Lichtfeld-Aufnahmeeinheit 1 abweichenden Gegenstandsweite bestimmt **(****Fig. 5****),** so werden die einzelnen ermittelten Abbilder 21, ..., 29 der Teilbilder L₁, ... L₉ des Bildstapels L nicht kongruent überlagert, sondern gegeneinander verschoben überlagert, was dazu führt, dass das durch Überlagerung erstellte Abbild unscharf wird **(****Fig. 6****).**

Verwendet man allgemein Gegenstände 2, deren Oberflächen nicht in einer zur Ebene 10 der Kameras 11, ..., 19 parallelen Ebene liegen, so erscheinen unterschiedliche Bildbereiche 21, ..., 29 mit Abbildern des Gegenstands 2 entsprechend ihrem jeweiligen Abstand von der Lichtfeld-Aufnahmeeinrichtung 1 jeweils unterschiedlich scharf. Je besser die für die Bildung des Verschiebungsvektors V verwendete Gegenstandsweite mit dem tatsächlichen Abstand d des Abbilds des Gegenstands 2 von der Lichtfeld-Aufnahmeeinrichtung 1 übereinstimmt, umso schärfer erscheint Abbild d₁, ..., dₙ bei einer dem Abstand d₁, ..., dₙ entsprechenden Überlagerung der Teilbilder L₁, ..., Lₘ.

Eine Möglichkeit, den Abstand eines Gegenstands 2 von der Lichtfeld-Aufnahmeeinheit 1 zu bestimmen, besteht darin, die Schärfe des Abbilds als Maß für die Qualität des überlagerten Abbilds im Bereich eines Pixels heranzuziehen und einen Schärfe- oder Qualitätswert zu ermitteln, der angibt, ob die jeweils vorgenommene Überlagerung anhand von Verschiebungsvektoren V für die gewählte Gegenstandsweite d₁, .... dₙ zu einem Überlagerungszwischenbild F₁, ..., Fₙ mit guter Qualität führt. Durch die Auswertung des Qualitätsmaßes M kann pixelweise jeweils ein Qualitätswert ermittelt werden. Je höher der ermittelte Qualitätswert des jeweiligen Pixels, desto größer ist die Wahrscheinlichkeit, dass der Abstand des Gegenstands 2 mit der dem jeweiligen Verschiebungsvektor V zugeordneten Gegenstandsweite d₁, ..., dₙ übereinstimmt.

Neben der pixelweise Ermittlung der Schärfe zur Bestimmung der Qualität der Überlagerung bestehen weitere Möglichkeiten zur Bestimmung eines solchen Qualitätsmaßes. Eine solche Möglichkeit wird später näher dargestellt.

Die Schärfe eines Bilds innerhalb eines Bildbereichs oder innerhalb der Umgebung eines Pixels lässt sich auf Grundlage unterschiedlicher Schärfemaße M bestimmen. Typischerweise umfasst die Auswertung des Schärfemaßes M, das zur Bestimmung der Bildschärfe in einem bestimmten Pixel herangezogen werden kann, mehrere Schritte, d.h. M(.) = M₂(M₁(.)), nämlich zunächst einen linearen Schritt M₁ und anschließend einen nichtlinearen Schritt M₂.

Beim linearen ersten Teilschritt M₁ zur Auswertung des Qualitätsmaßes M wird durch Bildung einer Linearkombination der Intensitätswerte der einzelnen Umgebungspixel desjenigen Pixels, in dem die Bildschärfe zu bestimmen ist, ein Zwischenergebnis ermittelt. Bei diesem Zwischenergebnis kann es sich beispielsweise um eine erste oder zweite räumliche Ableitung des Intensitätswerts oder der einzelnen Intensitätswerte handeln. Alternativ ist es auch möglich, dass in diesem ersten Schritt in einer lokalen Umgebung das jeweilige Pixel Fourier-Komponenten ermittelt werden. Selbstverständlich ist es auch möglich, mehrere Zwischenergebnisse zu ermitteln, die linear von den Intensitäten in den Pixeln abhängen.

Im zweiten Schritt M₂ wird auf das im ersten Schritt M₁ ermittelte Zwischenergebnis eine nicht-lineare Operation angewendet, bei dem aus dem Zwischenergebnis oder den Zwischenergebnissen mittels der zweiten nicht-linearen Operation ein Schärfewert ermittelt wird, der die Bildschärfe des jeweiligen Pixels angibt.

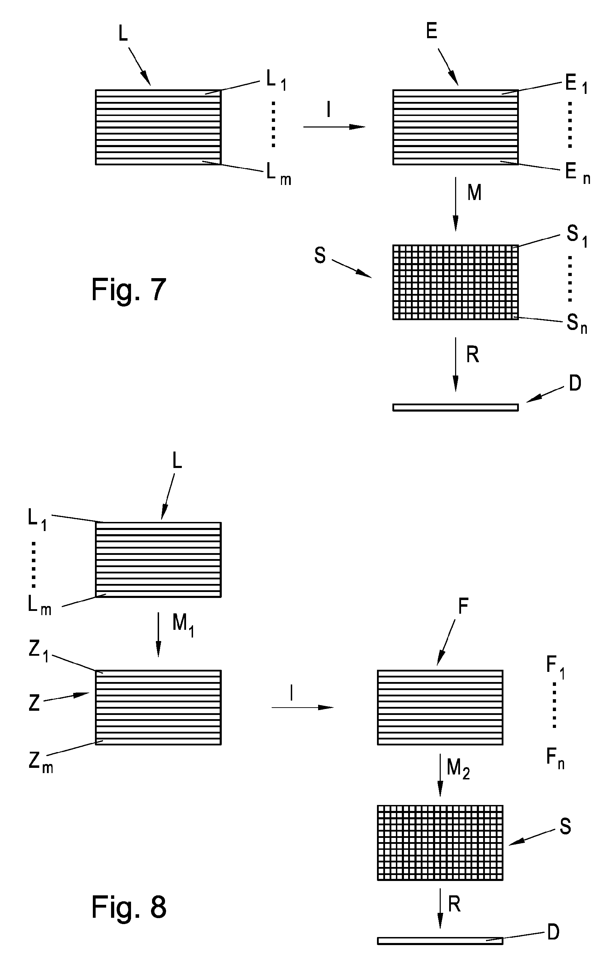

Wie in **Fig. 7** dargestellt, wird auf Grundlage des Bildstapels L des Lichtfeldes mittels Überlagerung I der jeweils im Zuge der Überlagerung zu verschiebenden Teilbilder L₁, ..., Lₘ eine Vielzahl von Überlagerungsbildern E₁, ..., Eₙ erstellt, wobei eine Anzahl von möglichen Gegenstandsweiten d₁, ..., dₙ vorgegeben wird und bei jedem Überlagerungsbild E₁, ... Eₙ jeweils auf die jeweilige Gegenstandsweite abgestimmte Verschiebungsvektoren V₁, ..., Vₘ zur Verschiebung herangezogen werden. Anschließend wird für jedes der Überlagerungsbilder E₁, ..., Eₙ jeweils ein Qualitätszwischenbild S₁, ..., Sₙ erstellt, wobei für jedes Pixel jedes Überlagerungsbilds E₁, ..., Eₙ jeweils separat ein Schärfemaß S ermittelt und in das Qualitätszwischenbild S₁, ..., Sₙ eingetragen wird. Anschließend wird für jedes Pixel jeweils dasjenige Qualitätszwischenbild S₁, ..., Sₙ und die diesem zugeordnete Gegenstandsweite d₁, ..., dₙ ermittelt, in dem der jeweils höchste Qualitäts- bzw. Schärfewert erkannt wurde.

Es wird anschließend ein Abstandsbild D erstellt, in das für jedes Pixel die jeweils ermittelte Gegenstandsweite d₁, ..., dₙ desjenigen Bilds, bei dem die höchste Qualität oder größte Schärfe der Überlagerung im jeweiligen Pixel erkannt wurde, eingetragen wird.

Eine erste besonders vorteilhafte Ausführungsform der Erfindung, die in Fig. 8 dargestellt ist, verringert den Ressourcenbedarf bei der Auswertung des Schärfemaßes. Bei der in **Fig. 7** dargestellten Ausführungsform der Erfindung wird das Schärfemaß M für jedes Überlagerungsbild E₁, ..., Eₙ separat ausgewertet. Bei einer genaueren Bestimmung des Abstands d des jeweiligen Gegenstands 2 von der Lichtfeld-Aufnahmeeinrichtung 1 ist dabei eine größere Anzahl von unterschiedlichen Qualitätszwischenbildern S₁, ..., Sₙ für jede Gegenstandsweite d₁, ..., dₙ zu erstellen. Je größer die Anzahl der Qualitätszwischenbilder S₁, ..., Sₙ ist, umso größer ist auch die Anzahl der erforderlichen Auswertungen des Schärfe- oder Qualitätsmaßes.

Die in **Fig. 8** dargestellte Ausführungsform der Erfindung macht sich nunmehr die Eigenschaft der Linearität der Überlagerung I der einzelnen verschobenen Teilbilder L₁, ..., Lₘ und des ersten Teilschritts M₁ des Schärfemaßes M zunutze und kehrt die Reihenfolge der Berechnung um. Zunächst wird für jedes der Teilbilder L₁, ..., Lₘ des Bildstapels L jeweils ein separates Zwischenbild Z₁, ..., Zₘ erstellt, wobei für jedes Pixel jedes der Teilbilder L₁, ..., Lₘ des Bildstapels L des Lichtfelds jeweils separat die im linearen Schritt M₁ ermittelten Zwischenergebnisse abgespeichert werden. Anders als bei der in **Fig. 7** dargestellten Ausführungsform wird die Überlagerung I nicht auf den Teilbildern L₁, ..., Lₘ des Bildstapels L des Lichtfeldes, sondern auf dem ermittelten Zwischenbildern Z₁, ..., Zₘ ausgeführt, wodurch für jede vorgegebene Gegenstandsweite d₁, ..., dₙ Überlagerungszwischenbilder F₁, ..., Fₙ erstellt werden. Auf diese Überlagerungszwischenbilder F₁, ..., Fₙ wird anschließend pixelweise die jeweilige nichtlineare Operation M₂ des Schärfemaßes M angewendet, sodass in den Überlagerungszwischenbildern F₁, ..., Fₙ die jeweils ermittelten Schärfewerte vorliegen. Diese Schärfewerte werden in einem jeweils hierfür vorgesehenen Qualitätszwischenbild S₁, ..., Sₙ abgespeichert.

Die Qualitätszwischenbilder S₁, ..., Sₙ, dargestellt in **Fig. 8****,** befinden sich nach der Durchführung des jeweiligen Verfahrens dieselben Schärfemaße wie in den in **Fig. 7** dargestellten Qualitätszwischenbildern. Aufgrund der vorteilhaften Berechnung bei der in **Fig. 8** dargestellten Vorgehensweise kann, insbesondere für den Fall, dass die Anzahl n der Überlagerungszwischenbilder F₁, ..., Fₙ die Anzahl m der Teilbilder L₁, ..., Lₘ des Bildstapels L übersteigt, eine erhebliche Ressourcenersparnis erzielt werden, wobei die ermittelten Endergebnisse numerisch identisch sind.

Die Bestimmung des Abstandes erfolgt bei dem in **Fig. 8** dargestellten Vorgehen exakt gleich wie bei dem in **Fig. 7** dargestellten Vorgehen.

Zur konkreten Bestimmung des Abstandes d eines auf ein Pixel abgebildeten Oberflächenbereichs des Gegenstands 2 von der Lichtfeld-Aufnahmeeinrichtung 1 können allgemein unterschiedliche Verfahren herangezogen werden. Eine erste besonders einfache Methode zur Ermittlung dieses Abstandes besteht darin, nach dem größten Schärfemaß oder allgemein Qualitätswert in den Qualitätsbildern S₁, ..., Sₙ an den jeweiligen Pixelpositionen zu suchen. Als Abstand d kann in diesem Fall die Gegenstandsweite desjenigen Qualitätsbilds S₁, ..., Sₙ in der Datenstruktur S zugewiesen werden, in der der jeweils größte Schärfemaß für das jeweilige Pixel aufgefunden wurde.

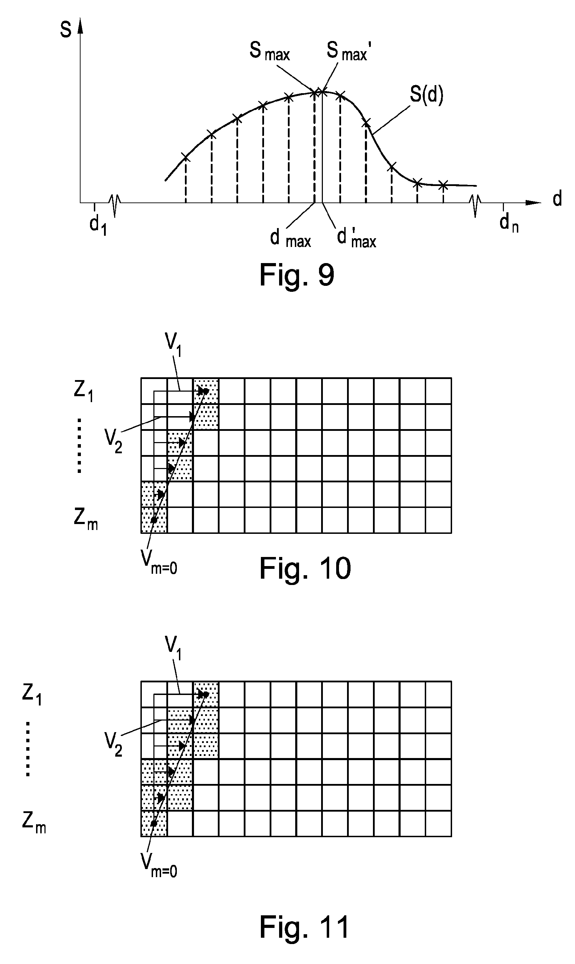

Es ist auch möglich, zunächst für die jeweilige Pixelposition das Qualitätszwischenbild S₁, ..., Sₙ mit dem jeweils größten Schärfewert Sₘₐₓ heranzuziehen und unter den an derselben Pixelposition liegenden Schärfewerten von Qualitätszwischenbildern S₁, ..., Sₙ mit ähnlicher zugeordneter Gegenstandsweite eine Interpolation vorzunehmen. Es wird eine Interpolationsfunktion S(d) **(****Fig. 9****)** gebildet, die den Verlauf der Schärfe bzw. Qualität über die Gegenstandsweite d angibt. Anschließend wird im Bereich der Umgebung des Maximums der Schärfe Sₘₐₓ das Maximum Sₘₐₓ der Interpolationsfunktion S(d) gesucht und die dem Maximum Sₘₐₓ der durch die Interpolation zugewiesene Gegenstandsweite dₘₐₓ dem Distanzbild D an der jeweiligen Pixelposition als Gegenstandsweite zugewiesen.

Die Überlagerung I der einzelnen gegeneinander verschobenen Zwischenbilder Z₁, ..., Zₘ L₁, ..., Lₘ des Bildstapels L des Lichtfelds kann auf unterschiedliche Weise vorgenommen werden. Grundsätzlich werden die einzelnen Zwischenbilder Z₁, ..., Zₘ um den jeweiligen Verschiebungsvektor V₁, ..., Vₘ verschoben und anschließend addiert, gegebenenfalls pixelweise durch die Anzahl m der Zwischenbilder Z₁, ..., Zₘ dividiert.

Wie in **Fig. 10** dargestellt, ist es möglich, bei einer Verschiebung bzw. einem Verschiebungsvektor V in Abhängigkeit von der Gegenstandsweite d um einen nicht ganzzahligen Pixelwert jeweils dasjenige Pixel heranzuziehen, das aufgrund einer vorgenommenen Rundung der jeweiligen durch die Verschiebung ermittelten nicht ganzzahligen Pixelposition am nächsten kommt.

Alternativ ist es, wie in **Fig. 11** dargestellt, auch möglich, eine Interpolation vorzunehmen und diejenigen Pixel im Umkreis der nicht ganzzahligen Pixelposition entsprechend ihrem Abstand von der jeweils nicht ganzzahligen Pixelposition anteilig heranzuziehen.

Bei einer zweiten bevorzugten Ausführungsform der Erfindung ist es auch möglich, anstelle der Verwendung eines Schärfemaßes als Qualitätsmaß, ein abweichendes Qualitätsmaß wie im Folgenden dargestellt, zu verwenden. Auch bei diesem Vorgehen wird zunächst in einem ersten linearen Teilschritt M₁ ein lineares Zwischenergebnis, beispielsweise eine erste oder zweite Ableitung, ein linearer Kantenfilter oder ähnliches, bestimmt.

Im zweiten, nichtlinearen Teilschritt M₂ wird das jeweils ermittelte Überlagerungszwischenbild F₁, .., Fₙ mit einem Referenzzwischenbild ZR verglichen, das nach der Ermittlung der Zwischenbilder Z₁, ..., Zₘ festgelegt wird.

Typischerweise wird als Referenzzwischenbild ZR dasjenige Zwischenbild herangezogen, das durch pixelweise Anwendung des ersten linearen Teilschritts M₁ auf das Referenzbild LR verwendet ermittelt wurde. Bei dem Referenzbild L₅ des Bildstapels L handelt es sich insbesondere um dasjenige Teilbild, das vor der Überlagerung I nicht verschoben wird, bzw. für das der Bildverschiebungsvektor V in jedem Fall identisch gleich Null ist.

Als Qualitätswert S wird im zweiten nichtlinearen Teilschritt M₂ vorzugsweise die Summe der Betragsdifferenzen der einzelnen Werte oder Zwischenergebnisse von Qualitätswerten einander zugeordneter Pixel herangezogen, wobei ein geringer Intensitätsunterschied eine hohe Qualität indiziert, d.h. dass sich der abgebildete Bereich des in einer dem jeweiligen Überlagerungszwischenbild F₁, ..., Fₙ zugeordneten Gegenstandsweite zur Aufnahmeeinheit 1 befindet.

Bei einer weiteren bevorzugten Ausführungsform der Erfindung ist es auch möglich, eine Kombination aus dem Schärfemaß und dem aus dem Qualitätsunterschied gewonnenen Maß zu ermitteln. Der erste der beiden Teilschritte M₁ ist stets linear in Bezug auf die Pixel-Intensitäten innerhalb der Umgebung des zu untersuchenden Pixels.
Die einfachste Kombination besteht in einer gewichteten Summe oder in der Bildung eines Mittelwerts. Es besteht jedoch auch die Möglichkeit, unterschiedliche nichtlineare Operationen auf das Übereinstimmungsmaß bzw. das Schärfemaß anzuwenden oder sogar eine auf das jeweilige Pixel bezogene lokale Funktion in die Bestimmung der Kombination mit einzubeziehen.

Ein zusammengesetztes Maß kann beispielsweise aus dem Schärfemaß und dem durch Vergleich mit dem Referenzzwischenbild ZR gewonnenen Maß wie folgt gewonnen werden: Beim ersten linearen Teilschritt M₁ werden für jedes der Pixel jeweils beiden räumlichen Ableitungen dlx, dly der Intensität ermittelt und als lineare Zwischenergebnisse zur Verfügung gehalten.

Im zweiten nichtlinearen Teilschritt M₂ werden einerseits die Beträge |dlx|, |dly| der beiden räumlichen Ableitungen dlx, dly gebildet und addiert, wodurch der erste Qualitätswert s₁ = |dlx| + |dly| der Auswertung des Schärfemaßes erhalten wird. Andererseits wird die Summe der Beträge der Differenzen der räumlichen Ableitungen dlx, dly und der entsprechenden räumlichen Ableitungen dlx_{R}, dly_{R} im Referenzzwischenbild ZR ermittelt und ein Übereinstimmungsmaß gemäß s₂ =|dlx - dlx_{R}| + |dly - dly_{R}| erhalten. Ein kombiniertes Qualitätsmaß S wird als Differenz des Schärfemaßes s₁ und des Übereinstimmungsmaßes s₂ gemäß S = s₂ - s₁ erhalten. Dieses Maß identifiziert eine umso höhere Qualität je größer die Schärfe im jeweiligen Pixel und je kleiner die Abweichung zum Referenzzwischenbild ZR ist.

Wenn das Qualitäts- oder Schärfemaß wie vorstehend beschrieben zusammengesetzt ist, wird bei den bevorzugten drei Ausführungsformen der Erfindung ein numerisch identisches Ergebnis erzielt wie bei dem in Fig. 7 dargestellten Vorgehen. Es ist jedoch auch möglich, bereits im ersten Schritt M₁ ein Zwischenergebnis zu ermitteln, das nichtlinear von den Intensitätswerten abhängt, beispielsweise einen mittels eines Kantenfilters wie beispielsweise eines Canny-Filters ermittelten Wert. In diesem Fall wird zwar nicht ein numerisch identisches Ergebnis wie bei dem in Fig. 7 dargestellten Vorgehen erzielt; dennoch erhält man vernünftige Werte für die Qualität, sodass eine Bestimmung des Abstands möglich ist.

## Patentansprüche

1. Verfahren zur Bestimmung des Abstands eines abgebildeten Gegenstands (2) oder einzelner Punkte der Oberfläche dieses Gegenstands (2) von einer Lichtfeld-Aufnahmeeinrichtung (1), wobei mit der Lichtfeld-Aufnahmeeinrichtung (1) das Lichtfeld des zu untersuchenden Gegenstands (2) ermittelt wird und in Form eines Bildstapels (L) zur Verfügung gestellt wird,
a) wobei der Bildstapel (L) des Lichtfeldes eine Anzahl von Teilbildern (L₁, ..., Lₘ) aufweist, wobei jedes Teilbild (L₁, ..., Lₘ) durch einen bezüglich des Gegenstandes (2) unterschiedlichen Aufnahmepunkt und einer daraus resultierenden unterschiedlichen Beobachtungsrichtung charakterisiert ist,
b) wobei ein Qualitätsmaß (M), insbesondere ein Schärfemaß (M), eines Pixels eines zweidimensionalen Bildes, vorgegeben wird, das auf Grundlage der Intensitätswerte der innerhalb einer vorgegebenen Umgebung um das jeweilige Pixel befindlichen Umgebungspixel ermittelt wird, **dadurch gekennzeichnet, dass**
die Bestimmung des Qualitätsmaßes (M) zwei Teilschritte (M₁, M₂) aufweist, nämlich
aa) zumindest einen, insbesondere linearen, ersten Teilschritt (M₁), bei dem durch Bildung einer Linearkombination der Intensitätswerte der einzelnen Umgebungspixel ein Zwischenergebnis ermittelt wird und
bb) zumindest einen darauf folgenden, insbesondere nichtlinearen, zweiten Teilschritt (M₂), bei dem aus dem Zwischenergebnis oder den Zwischenergebnissen mittels einer, insbesondere nichtlinearen, Operation ein Qualitätswert ermittelt wird,
wobei
c) für jedes der Teilbilder (L₁, ..., Lₘ) jeweils ein separates Zwischenbild (Z₁, ..., Zₘ) erstellt und dem jeweiligen Teilbild (L₁, ..., Lₘ) zugeordnet wird, und für die einzelnen Pixel jedes der Teilbilder (L₁, ..., Lₘ) jeweils separat das Zwischenergebnis des, insbesondere linearen, ersten Teilschrittes (M₁) des Qualitätsmaßes (M) ermittelt wird und dieses Zwischenergebnis dem jeweiligen Pixel im jeweiligen Zwischenbild (Z₁,.... Zₘ) zugewiesen wird,
d) für eine vorgegebene Anzahl von vorab vorgegebenen Gegenstandsweiten (d₁, ..., dₙ) jeweils
- für jedes Teilbild (L₁, ..., Lₘ) separat ein Verschiebungsvektor (V₁, ..., Vₘ) in Abhängigkeit von der Gegenstandsweite (d₁, ..., dₙ) sowie der Position der das jeweilige Teilbild (L₁, ..., Lₘ) erstellenden Kamera (11, ..., 19) ermittelt wird
- das dem Teilbild (L₁, ..., Lₘ) zugeordnete Zwischenbild (Z₁, ..., Zₘ) entsprechend dem ermittelten Verschiebungsvektor (V) verschoben wird, und
- jeweils ein Überlagerungszwischenbild (F₁, ..., Fₙ) durch Summation oder Mittelwertbildung der Intensitätswerte für jedes Pixel der verschobenen Zwischenbilder (Z₁, ..., Zₙ) erstellt wird und diesem Überlagerungszwischenbild (F₁, ..., Fₙ) die jeweilige Gegenstandsweite (d₁,..., dₙ) zugewiesen wird,
e) in den einzelnen Pixeln jedes Überlagerungszwischenbildes (F₁, ..., Fₙ) die, insbesondere nichtlineare, Operation des zweiten Teilschritts des Qualitätsmaßes (M) jeweils separat und pixelweise angewendet wird, und für jedes Überlagerungszwischenbild (F₁, ..., Fₙ) jeweils ein die erhaltenen Qualitätswerte enthaltendes Qualitätsbild (S) erstellt wird, und
f) für jede Pixelposition jeweils zumindest ein Qualitätsbild (S) gesucht wird, für das bei dem an der jeweiligen Pixelposition befindlichen Pixel ein großer, insbesondere der größte, Qualitätswert ermittelt wurde und die diesem zumindest einen Qualitätsbild zugeordnete Gegenstandsweite (d₁, ..., dₙ) für die Bestimmung des Abstandes des jeweiligen Gegenstandspunkts von der Lichtfeld-Aufnahmeeinrichtung (1) herangezogen wird.

2. Verfahren nach Anspruch 1, **dadurch gekennzeichnet,**
- **dass** für die jeweilige Pixelposition das Qualitätsbild (S₁, ..., Sₙ) mit dem größten Qualitätswert ermittelt wird und die diesem Qualitätsbild zugeordnete Gegenstandsweite (d₁, ..., dₙ) als Abstand herangezogen wird, oder
- **dass** für die jeweilige Pixelposition jeweils das Qualitätsbild (S₁, .., Sₙ) mit dem größten Qualitätswert ermittelt wird und unter den an derselben Pixelposition liegenden Qualitätswerten von Bildern mit ähnlicher Gegenstandsweite eine Interpolation vorgenommen wird und eine Interpolationsfunktion (S(d)) gebildet wird, die den Verlauf der Qualität (S) über die Gegenstandsweite (d) angibt, und das Maximum (Sₘₐₓ) der Qualität (S) für diese Interpolationsfunktion (S(d)) gesucht wird und die dem Maximum der Qualität durch die Interpolationsfunktion zugewiesene Gegenstandsweite (d₁, ..., dₙ) als Abstand herangezogen wird,
wobei insbesondere ein Abstandsbild (D) mit den Abmessungen eines der Qualitätsbilder (S₁, ..., Sₙ) erstellt wird und an jeder Pixelposition der Abstand (d) bestimmt und dem Abstandsbild (D) an der jeweiligen Pixelposition zugewiesen wird.

3. Verfahren nach Anspruch 1 oder 2, **dadurch gekennzeichnet, dass** die Anzahl (n) der Schärfebilder (S₁, ..., Sₙ) und Überlagerungszwischenbilder (F₁, ..., Fₙ), insbesondere bei Implementierung auf Standard-CPU-Architekturen, größer ist als die Anzahl (m) der Teilbilder (L₁, ..., Lₘ) des Bildstapels (L) des Lichtfelds.

4. Verfahren nach einem der vorangehenden Ansprüche, **dadurch gekennzeichnet, dass** bei Verschiebung der einzelnen Teilbilder (L₁, ..., Lₘ) in Abhängigkeit von der Gegenstandsweite (d) um nicht ganzzahlige Pixelpositionen eine Interpolation der Werte der Zwischenergebnisse durchgeführt wird, insbesondere
- indem eine Interpolation nach dem kubischen oder linearen Verfahren durchgeführt und/oder
- indem der Wert des jeweils am nächsten liegenden Nachbarpixels selektiert wird.

5. Verfahren nach einem der vorangehenden Ansprüche, **dadurch gekennzeichnet, dass** als Qualitätsmaß (M) ein Schärfemaß in Form der Absolutwerte oder Quadrate einer, insbesondere ersten oder zweiten, räumlichen Ableitung des Intensitätswerts herangezogen wird, und/oder
dass als Qualitätsmaß (M) ein Schärfemaß in Form der, in einer lokalen Umgebung um das jeweilige Pixel ermittelten Fourier-Komponenten, insbesondere bestimmt durch eine gewichtete Summe der Absolutwerte oder Quadrate der Koeffizienten der betrachteten Fourier-Komponenten und/oder einzelner gerader und ungerader Fourier-Basisfunktionen, herangezogen wird.

6. Verfahren nach einem der vorangehenden Ansprüche **dadurch gekennzeichnet, dass** als Qualitätsmaß (M) ein Übereinstimmungsmaß herangezogen wird, zu dessen Bildung die Norm oder der Betrag der Differenz des Intensitätswerts und des Intensitätswerts eines Referenzzwischenbilds (Z_{R}) herangezogen wird, wobei eine große Übereinstimmung mit dem Referenzzwischenbild (Z_{R}) eine hohe Qualität indiziert,
wobei das Referenzzwischenbild (Z_{R}) unter den Zwischenbildern (Z₁, ..., Zₘ) ausgewählt wird, und vorzugsweise dasjenige Zwischenbild (Z₁, ..., Zₘ) als Referenzzwischenbild (Z_{R}) ausgewählt wird, das demjenigen Teilbild (L₁, ..., Lₘ) zugeordnet ist, dessen Verschiebungsvektor (V) gleich dem Nullvektor ist.

7. Verfahren nach einem der vorangehenden Ansprüche, **dadurch gekennzeichnet, dass** als Qualitätsmaß (M) eine Kombination eines Übereinstimmungsmaßes nach Anspruch 6 und eines Schärfemaßes insbesondere nach Anspruch 5 herangezogen wird, wobei eine große Übereinstimmung und eine große Schärfe jeweils eine hohe Qualität indizieren.

8. Datenträger, auf dem ein Programm zur Durchführung eines Verfahrens nach einem der vorangehenden Ansprüche abgespeichert ist.

## Claims

1. A method for determining the distance of a depicted object (2) or individual points of the surface of said object (2) by a light field recording device (1), wherein with the light field recording device (1) the light field of the object (2) to be investigated is determined and is made available in the form of an image stack (L),
a) wherein the image stack (L) of the light field has a number of partial images (L₁, ..., Lₘ), wherein each partial image (L₁, ..., Lₘ) is **characterized by** a different recording point in respect to the object (2) and a different observation direction resulting therefrom,
b) wherein a quality measure (M), in particular a sharpness measure (M), of a pixel of a two-dimensional image, is provided, which is determined on the basis of the intensity values of the environment pixel located within a predetermined environment around the respective pixel, **characterized in that**
the determination of the quality measure (M) has two partial steps (M₁, M₂), namely
aa) at least one, in particular linear, first partial step (M₁), in which an intermediate result is determined through formation of a linear combination of the intensity values of the individual environment pixels and
bb) at least one ensuing, in particular non-linear, second partial step (M₂), in which a quality value is determined from the intermediate result or from the intermediate results by means of an, in particular, non-linear, operation,
wherein
c) for each of the partial images (L₁, ..., Lₘ) in each case a separate intermediate image (Z₁, ..., Zₘ) is created and is assigned to the respective partial image (L₁, ..., Lₘ), and for each individual pixel of each of the partial images (L₁, ..., Lₘ) in each case the intermediate result of an, in particular linear, first partial step (M₁) of the quality measure (M) is determined separately and this intermediate result is assigned to the respective pixel in the respective intermediate image (Z₁, ..., Zₘ),
d) for a predetermined number of object distances (d₁, ..., dₙ) predetermined in advance in each case
- for each partial image (L₁, ..., Lₘ) a displacement vector (V₁, ..., Vₘ) is determined separately depending on the object distance (d₁, ..., dₙ) as well as the position of the camera (11, ..., 19) generating the respective partial image (L₁, ..., Lₘ)
- the intermediate image (Z₁, ..., Zₘ) assigned to the partial image (L₁, ..., Lₘ) is displaced in accordance with the displacement vector (V) determined, and
- in each case an overlap intermediate image (F₁, ..., Fₙ) is created by summation or averaging the intensity values for each pixel of the displaced intermediate images (Z₁, ..., Zₙ) and the respective object distance (d₁, ..., dₙ) is assigned to this overlap intermediate image (F₁, ..., Fₙ),
e) in the individual pixels of each overlap intermediate image (F₁, ..., Fₙ) the, in particular nonlinear, operation of the second partial step of the quality measure (M) is applied in each case separately and by pixel, and for each overlap intermediate image (F₁, ..., Fₙ), in each case a quality image (S) containing the quality values obtained is created, and
f) for each pixel position in each case at least one quality image (S) is sought, for which in the pixel located in the respective pixel position a larger, in particular the largest, quality value was determined and the object distance (d₁, ..., dₙ) assigned to this at least one quality image is used by the light field recording device (1) for the determination of the distance of the respective object point.

2. A method according to Claim 1, **characterized in**
- **that** for the respective pixel position in each case the quality image (S₁, ..., Sₙ) with the largest quality value is determined and the object distance (d₁, ..., dₙ) assigned to this quality image is used as the distance, or
- **that** for the respective pixel position in each case the quality image (S₁, ..., Sₙ) with the largest quality value is determined and under the quality values lying in the same pixel position of images with similar object distance an interpolation is made and an interpolation function (S(d)) is formed, which indicates the course of the quality (S) over the object distance (d), and the maximum (Sₘₐₓ) of the quality (S) for this interpolation function (S(d)) is sought and the object distance (d₁, ..., dₙ) assigned to the maximum of the quality by the interpolation function is used as the distance,
wherein in particular a distance image (D) is created with the dimensions of one of the quality images (S₁, ..., Sₙ) and the distance (d) is determined at each pixel position and is assigned to the distance image (D) at the respective pixel position.

3. A method according to Claim 1 or 2, **characterized in that** the number (n) of the sharpness images (S₁, ..., Sₙ) and overlap intermediate images (F₁, ..., Fₙ), in particular during implementation on standard CPU architectures, is larger than the number (m) of the partial images (L₁, ..., Lₘ) of the image stack (L) of the light field.

4. A method according to one of the preceding claims, **characterized in that** upon displacement of the individual partial images (L₁, ..., Lₘ) depending on the object distance (d) of non-integer pixel positions an interpolation of the values of the intermediate results is made, in particular
- while an interpolation is made according to the cubic or linear method and/or
- while the value of the in each case the next neighboring pixel is selected.

5. A method according to one of the preceding claims, **characterized in that** as quality measure (M) a sharpness measure in the form of the absolute values or squares of an, in particular,r first or second spatial derivation of the intensity value is used, and/or that as quality measure (M) a sharpness measure is used in the form of the Fourier components determined in a local environment around the respective pixel, in particular, determined by a weighted sum of the absolute values or squares of the coefficients of the Fourier components considered and/or of individual even and odd Fourier basis functions.

6. A method according to one of the preceding claims, **characterized in that** as quality measure (M) a measure of agreement is used, for the formation of which the standard or the amount of the difference of the intensity value and of the intensity value of a reference intermediate image (Z_{R}) is used, wherein a large agreement with the reference intermediate image (Z_{R}) is selected among the intermediate images (Z₁, ..., Zₘ), and preferably that intermediate image (Z₁, ..., Zₘ) is selected as reference intermediate image (Z_{R}), which is assigned to that partial image (L₁, ..., Lₘ), the displacement vector (V) of which is equal to the zero vector.

7. A method according to one of the preceding claims, **characterized in that** as quality measure (M) a combination of a measure of agreement according to Claim 6 and of a sharpness measure in particular according to Claim 5 is used, wherein a large agreement and a large sharpness in each case indicate a high quality.

8. A data carrier, on which a program for implementation of a method according to one of the preceding claims is stored.

## Revendications

1. Procédé de définition de la distance séparant un objet (2) représenté ou différents points de la surface de cet objet (2) d'un dispositif d'enregistrement de champ lumineux (1), le champ lumineux de l'objet (2) à examiner étant déterminé avec le dispositif d'enregistrement de champ lumineux (1) et mis à disposition sous forme d'une pile d'images (L),
a) la pile d'images (L) du champ lumineux présentant un nombre d'images partielles (L₁, ..., Lₘ), chaque image partielle (L₁, ..., Lₘ) étant **caractérisée par** un point d'enregistrement différent par rapport à l'objet (2) et une direction d'observation différente qui en résulte,
b) une mesure de qualité (M), en particulier une mesure de netteté (M), d'un pixel d'une image bidimensionnelle étant spécifiée, qui est déterminée sur la base des valeurs d'intensité des pixels environnants situés à l'intérieur d'un environnement spécifié autour du pixel respectif, **caractérisé en ce que**
la définition de la mesure de qualité (M) présente deux étapes partielles (M₁, M₂), à savoir
aa) au moins une première étape partielle (M₁), en particulier linéaire, dans laquelle un résultat intermédiaire est déterminé par la formation d'une combinaison linéaire des valeurs d'intensité des différents pixels environnants et
bb) au moins une deuxième étape partielle (M₂) qui suit, en particulier non linéaire, dans laquelle une valeur de qualité est déterminée à partir du résultat intermédiaire ou des résultats intermédiaires au moyen d'une opération, en particulier non linéaire,
c) une image intermédiaire (Z₁, ..., Zₘ) séparée étant établie respectivement pour chacune des images partielles (L₁, ..., Lₘ) et étant affectée à l'image partielle (L₁, ..., Lₘ) respective et, pour les différents pixels de chacune des images partielles (L₁, ..., Lₘ), le résultat intermédiaire de la première étape partielle (M₁) respective, en particulier linéaire, de la mesure de qualité (M) est déterminé respectivement séparément, et ce résultat intermédiaire est affecté au pixel respectif dans l'image intermédiaire (Z₁, ..., Zₘ) respective,
d) pour un nombre spécifié de largeurs d'objet (d₁, ..., dₙ) spécifiées préalablement, respectivement
pour chaque image partielle (L₁, ..., Lₘ), un vecteur de déplacement (V₁, ..., Vₘ) est établi séparément en fonction de la largeur d'objet (d₁, ..., dₙ) ainsi que de la position de la caméra (11, ..., 19) établissant l'image partielle (L₁, ..., Lₘ) respective,
- l'image intermédiaire (Z₁, ..., Zₘ) affectée à l'image partielle (L₁, ..., Lₘ) est déplacée conformément au vecteur de déplacement (V) déterminé, et
- respectivement une image intermédiaire de superposition (F₁, ..., Fₙ) est établie par la sommation ou le calcul de la moyenne des valeurs d'intensité pour chaque pixel des images intermédiaires (Z₁, ..., Zₘ) déplacées, et la largeur d'objet (d₁, ..., dₙ) respective est affectée à cette image intermédiaire de superposition (F₁, ..., Fₙ),
e) dans les différents pixels de chaque image intermédiaire de superposition (F₁, ..., Fₙ), l'opération, en particulier non linéaire, de la deuxième étape partielle de la mesure de qualité (M) est utilisée respectivement séparément et pixel par pixel, et respectivement une image de qualité (S) contenant les valeurs de qualité obtenues est établie, et
f) pour chaque position de pixel, il est recherché respectivement au moins une image de qualité (S) pour laquelle, pour le pixel situé à la position de pixel respective, une valeur de qualité élevée, en particulier la plus élevée, a été déterminée, et la largeur d'objet (d₁, ..., dₙ) affectée à cette qualité d'image au moins au nombre de un est utilisée pour la définition de la distance du point d'objet respectif par rapport au dispositif d'enregistrement de champ lumineux (1).

2. Procédé selon la revendication 1, **caractérisé en ce que**,
- l'image de qualité (S₁, ..., Sₙ) ayant la valeur de qualité la plus élevée est déterminée pour la position de pixel respective, et la largeur d'objet (d₁, ..., dₙ) affectée à cette image de qualité est utilisée comme distance, ou
- **en ce que** l'image de qualité (S₁, ..., Sₙ) ayant la valeur de qualité la plus élevée est déterminée pour la position de pixel respective, et une interpolation est entreprise parmi les valeurs de qualité, situées à la même position de pixel, d'images ayant une largeur d'objet identique, et il est formé une fonction d'interpolation (S(d)) qui indique la courbe de la qualité (S) au regard de la largeur d'objet (d), et le maximum (Sₘₐₓ) de la qualité (S) pour cette fonction d'interpolation (S(d)) est recherchée, et la largeur d'objet (d₁, ..., dₙ) affectée au maximum de qualité par la fonction d'interpolation est utilisée comme distance,
en particulier une image de distance (D) ayant les dimensions d'une des images de qualité (S₁, ..., Sₙ) est établie et la distance (d) est définie à chaque position de pixel et est affectée à l'image de distance (D) à la position de pixel respective.

3. Procédé selon la revendication 1 ou 2, **caractérisé en ce que** le nombre (n) d'images de netteté (S₁, ..., Sₙ) et d'images intermédiaires de superposition (F₁, ..., Fₙ), en particulier lors de la mise en oeuvre sur des architectures Standard-CPU, est plus élevé que le nombre (m) d'images partielles (L₁, ..., Lₘ) de la pile d'images (L) du champ lumineux.

4. Procédé selon l'une des revendications précédentes, **caractérisé en ce que**, lors du déplacement des images partielles (L₁, ..., Lₘ) individuelles, en fonction de la largeur d'objet (d), autour des positions de pixel qui ne sont pas sous forme de nombre entier, il est effectué une interpolation des valeurs des résultats intermédiaires, en particulier
- par le fait qu'une interpolation est effectuée selon le procédé cubique ou linéaire, et/ou
- par le fait que la valeur du pixel voisin respectivement le plus proche est sélectionnée.

5. Procédé selon l'une des revendications précédentes, **caractérisé en ce que**, comme mesure de qualité (M), il est utilisé une mesure de netteté sous forme de valeurs absolues ou de carrés d'une dérivée spatiale, en particulier d'une première ou deuxième dérivée spatiale, de la valeur d'intensité, et/ou
**en ce que**, comme mesure de qualité (M), il est utilisé une mesure de netteté sous forme de composantes de Fourier déterminées dans un environnement local autour du pixel respectif, en particulier définies par une somme pondérée des valeurs absolues ou des carrés des coefficients des composantes de Fourier considérées et/ou de différentes fonctions de base de Fourier paires ou impaires.

6. Procédé selon l'une des revendications précédentes, **caractérisé en ce que**, comme mesure de qualité (M), il est utilisé une mesure de coïncidence pour la formation de laquelle on utilise la norme ou le montant de la différence de la valeur d'intensité et de la valeur d'intensité d'une image intermédiaire de référence (Z_{F}), une coïncidence élevée avec l'image intermédiaire de référence (Z_{R}) indiquant une qualité élevée,
l'image intermédiaire de référence (Z_{R}) étant sélectionnée parmi les images intermédiaires (Z₁, ..., Zₘ), et on sélectionne de préférence comme image intermédiaire de référence (Z_{R}) l'image intermédiaire (Z₁, ..., Zₘ) qui est affectée à l'image partielle (L₁, ..., Lₘ) dont le vecteur de déplacement (V) est égal au vecteur nul.

7. Procédé selon l'une des revendications précédentes, **caractérisé en ce que**, comme mesure de qualité (M), on utilise une combinaison d'une mesure de coïncidence selon la revendication 6 et d'une mesure de netteté en particulier selon la revendication 5, une coïncidence élevée et une netteté élevée indiquant une qualité élevée.

8. Support de données sur lequel est enregistré un programme de réalisation d'un procédé selon l'une des revendications précédentes.
